# EUROPEAN PATENT APPLICATION

(11) **EP 1 760 718 A2**
(43) Date of publication of application: **07.03.2007**
(21) Application number: 06117814.1
(22) Date of filing: 25.07.2006
(51) Int. Cl.: G11B 27/034

(54) **Information editing apparatus, information editing method, and information editing program**

(30) Priority: 29.08.2005 JP 2005247777
(71) Applicant: KABUSHIKI KAISHA TOSHIBA, Tokyo 105-8001 (JP)
(72) Inventor: Haruki, Kosuke c/o Toshiba Corporation, Minato-ku Tokyo 105-8001 (JP)
(74) Representative: Henkel, Feiler & Hänzel

(57) **Abstract**

An information editing apparatus comprises a reproducing unit (1, 2, 3) configured to reproduce audio-video information, a boundary detecting unit (4) configured to analyze the audio-video information reproduced by the reproducing unit and detect a boundary point in the audio-video information, a chapter division specifying unit (15, 12d) configured to specify chapter division according to the input of chapter division operation during the reproduction of the audio-video information by the reproducing unit, and a chapter setting unit (5) configured to correct a chapter division point corresponding to the timing of specifying chapter division on the basis of the boundary point in the audic-video information detected before or after the timing of specifying chapter division at the chapter division specifying unit and set the corrected chapter division point.

## Description

This invention relates to an information editing apparatus, an information editing method, and an information editing program which record audio-video information and which divide and edit the recorded audio-video information in units called chapters.

In recent years, a recording and reproducing apparatus capable of recording audio-video information onto a DVD or an HD (hard disk) in digital form has been popularized remarkably. Such a recording and reproducing apparatus can record audio-video information in digital form and divide and edit the recorded audio-video information in units called chapters.

For example, the user presses the chapter division button at the time when he or she wants division, while reproducing the target audio-video information with the recording and reproducing apparatus in the normal mode (checking an ordinary playback screen). The recording and reproducing apparatus detects the pressing of the chapter division button (with the timing of pressing the chapter division button) and sets a chapter division point in the target audio-video information.

Alternatively, the user presses the chapter division button at the time when he or she wants division, while reproducing the target audio-video information with the recording and reproducing apparatus in the chapter editing mode (checking a chapter editing screen). The recording and reproducing apparatus detects the pressing of the chapter division button (with the timing of pressing the chapter division button) and sets a chapter division point in the target audio-video information.

In the normal reproduction, the division point the user wants may deviate from the actual division point (with the timing of pressing the chapter division button). To decrease the deviation, such an operation as pause or playback return can be used. However, chapter division requiring those operations is troublesome to the user. Jpn. Pat. Appln. KOKAI Publication No. 2003-324686 has disclosed the technique for returning the playback position with a small amount of return during the reproduction of audio and video. However, chapter division requiring those operations is troublesome to the user as described above.

In the chapter editing mode, playback control can be performed more precisely than normal playback, which makes it possible to decrease the deviation of the division point the user wants from the actual division point. However, executing the chapter editing mode itself is troublesome to the user. Moreover, it is difficult for novice users unfamiliar with the operation of a recording and reproducing apparatus to understand the meaning of the execution of the chapter editing mode.

As described above, just pressing the chapter division button causes a problem: the division point the user wants deviates from the actual division point. A combination of several operations can decrease the deviation to some extent, but causes a new problem: operations become complex.

An object of the present invention is to provide an information editing apparatus, an information editing method, and an information editing program which enable a division point the user wants to be set easily.

According to an aspect of the present invention, there is provided an information editing apparatus comprising: a reproducing unit configured to reproduce audio-video information; a boundary detecting unit configured to analyze the audio-video information reproduced by the reproducing unit and detect a boundary point in the audio-video information; a chapter division specifying unit configured to specify chapter division according to the input of chapter division operation during the reproduction of the audio-video information by the reproducing unit; and a chapter setting unit configured to correct a chapter division point corresponding to the timing of specifying chapter division on the basis of the boundary point in the audio-video information detected before or after the timing of specifying chapter division at the chapter division specifying unit and set the corrected chapter division point.

According to another aspect of the present invention, there is provided an information editing method comprising: on the basis of a boundary point in audio-video information detected before or after the timing of specifying chapter division according to a chapter division instruction during the reproduction of audio-video information, correcting a chapter division point corresponding to the timing of specifying chapter division; and setting the corrected chapter division point.

According to still another aspect of the present invention, there is provided an information editing program comprising: causing an information editing apparatus to carry out a step of, on the basis of a boundary point in audio-video information detected before or after the timing of specifying chapter division according to a chapter division instruction during the reproduction of audio-video information, correcting a chapter division point corresponding to the timing of specifying chapter division and a step of setting the corrected chapter division point.

The invention can be more fully understood from the following detailed description when taken in conjunction with the accompanying drawings, in which:
FIG. 1 schematically shows the configuration of an information recording and reproducing apparatus (or information editing apparatus) according to an embodiment of the present invention;
FIG. 2 is a diagram to help explain the problems of chapter division;
FIG. 3 is a diagram to help explain the setting of chapter division points in the embodiment;
FIG. 4 is a flowchart to help explain the setting of chapter division points in the embodiment;
FIG. 5 is a flowchart to help explain the process of selecting a first correction that corrects a chapter division point so as to put the point before the timing of specifying chapter division and a second correction that corrects a chapter point so as to put the point after the timing of specifying chapter division and then setting them in the embodiment;
FIG. 6 is a timing chart to help explain the basic principle of detecting a scene change in the embodiment;
FIGS. 7A and 7B are diagrams to help explain determination condition 1 in detecting a scene change in the embodiment;
FIG. 8 is a diagram to help explain determination condition 2 in detecting a scene change in the embodiment;
FIGS. 9A and 9B are diagrams to help explain determination condition 3 in detecting a scene change in the embodiment; and
FIG. 10 is a flowchart to help explain the procedure for detecting a scene change in the embodiment.

Various embodiments according to the invention will be described hereinafter with reference to the accompanying drawings. In general, according to one embodiment of the invention, there is provided an information editing method comprising: on the basis of a boundary point in audio-video information detected before or after the timing of specifying chapter division according to a chapter division instruction during the reproduction of audio-video information, correcting a chapter division point corresponding to the timing of specifying chapter division; and setting the corrected chapter division point.

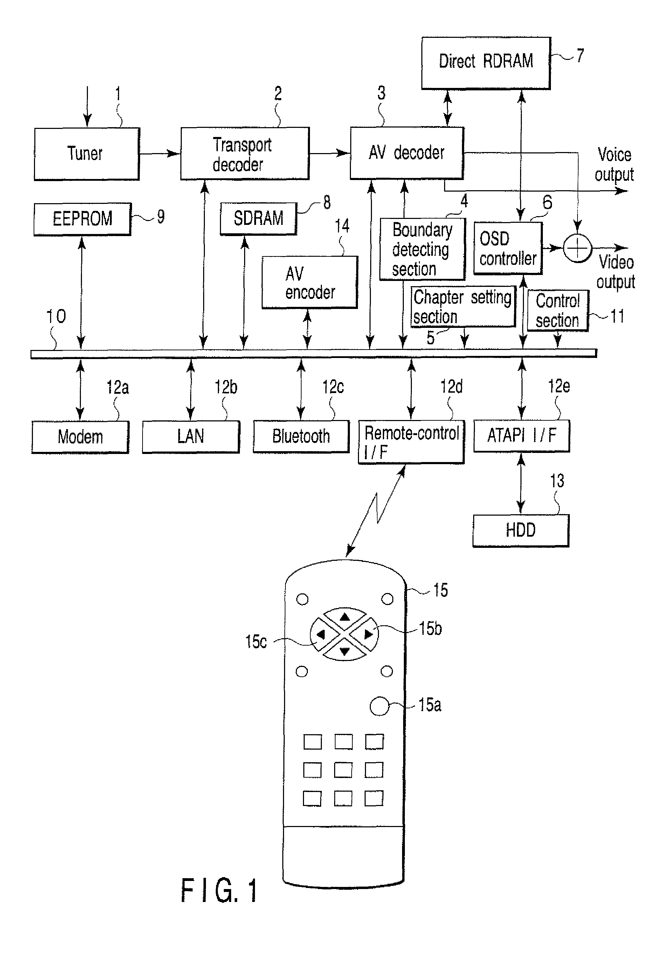

FIG. 1 schematically shows the configuration of an information recording and reproducing apparatus (or information editing apparatus) according to an embodiment of the present invention.

As shown in FIG. 1, the information recording and reproducing apparatus comprises a tuner 1, a transport decoder 2, an AV decoder 3, a boundary detecting section 4, a chapter setting section 5, an OSD (on-screen display) controller 6, a direct RDRAM 7, an SDRAM 8, an EEPROM 9, a main bus 10, a control section (CPU) 11, a modem interface 12a, a LAN terminal 12b, a Bluetooth (registered trademark) interface 12c, a remote-control interface 12d, an ATAPI interface 12e, and an HDD (hard disk drive) 13.

The tuner 1 receives, for example, a broadcast signal. The transport decoder 2 and AV decoder 3 decode the received signal. The AV decoder 3 outputs the decoded audio signal and video signal separately. The combining circuit may combine the video signal from the AV decoder 3 with the video signal from the OSD controller 6 and output the resulting signal.

The boundary detecting section 4 analyzes the audio-video signal decoded by the AV decoder 3 and detects a boundary point in the audio-video signal. For example, the boundary detecting section 4 detects a scene change point on the basis of the result of the analysis of the similarity between frames included in the audio-video signal and sets the scene change point as a boundary point. That is, when similar frames follow one after another, it is determined that there is no scene change and that a point to which a different frame is connected is a scene change.

Alternatively, the boundary detecting section 4 sets as a boundary point the scene change point detected on the basis of the result of the analysis of the luminance signals of a plurality of frames included in the audio-video information.

Alternatively, the boundary detecting section 4 sets as a boundary point the audio output change point (scene change point) detected on the basis of the result of the analysis of the audio-video information. The audio output change point is, for example, a monaural/stereo change point or a non-multiple broadcasting/multiple broadcasting (bilingual broadcast) change point.

Alternatively, the boundary detecting section 4 detects a change point (scene change point) where the bit rate changes greatly on the basis of the result of the analysis of the audio-video information and sets the change point where the bit rate changes greatly as a boundary point. For example, audio-video information about CM or the like has a relatively large amount of change, whereas audio-video information about the main story has a relatively small amount of change. Therefore, it is possible to distinguish between CM and the main story from a change point in the bit rate.

Alternatively, the boundary detecting section 4 sets as boundary points the first silent section (scene change point) and the last silent section (scene change point) among a plurality of silent sections regularly following one after another detected on the basis of the result of the analysis of the audio-video information. For example, the duration of a commercial is determined to be a multiple of a specific time (e.g., 15 seconds). Thus, a commercial interval where a plurality of commercials continue is also a multiple of the specific time. Between the main story and a commercial and between commercials, there is a silent section. Taking all of these into account, the first silent section among the silent sections regularly following one after another is a change point at which the main story is changed to a commercial interval and the last silent section is a change point at which a commercial interval is changed to the main story.

According to the pressing of the chapter division button provided on the remote controller 15, the chapter setting section 5 sets a chapter division point in the audio-video information being reproduced. The setting of a chapter division point by the chapter setting section 5 will be explained later in further detail.

The direct RDRAM 7 temporarily stores the data from the AV decoder 3 or OSD controller 6. The SDRAM 8 temporarily stores the received signal for, for example, an error correction process. The EEPROM 9 stores, for example, various operation programs or parameters.

The transport decoder 2, AV decoder 3, OSD controller 6, SDRAM 8, and EEPROM 9 are connected to the main bus 10. Further connected to the main bus 10 is the control section 11. The information recording and reproducing apparatus can be further connected to an external unit via the main bus 10. To do this, the model interface 12a, LAN terminal 12b, Bluetooth (registered trademark) interface 12c, remote-control interface 12d, and ATAPI interface 12e are connected to the main bus 10. The HDD 13 is connected to the main bus 10 via the ATAPI interface 12e. Further connected to the main bus 10 is the AV encoder 14. The AV encoder 14 converts an audio-video signal into a signal in a specific format (e.g., complying with the DVD standard) to record the audio-video signal into a recording medium.

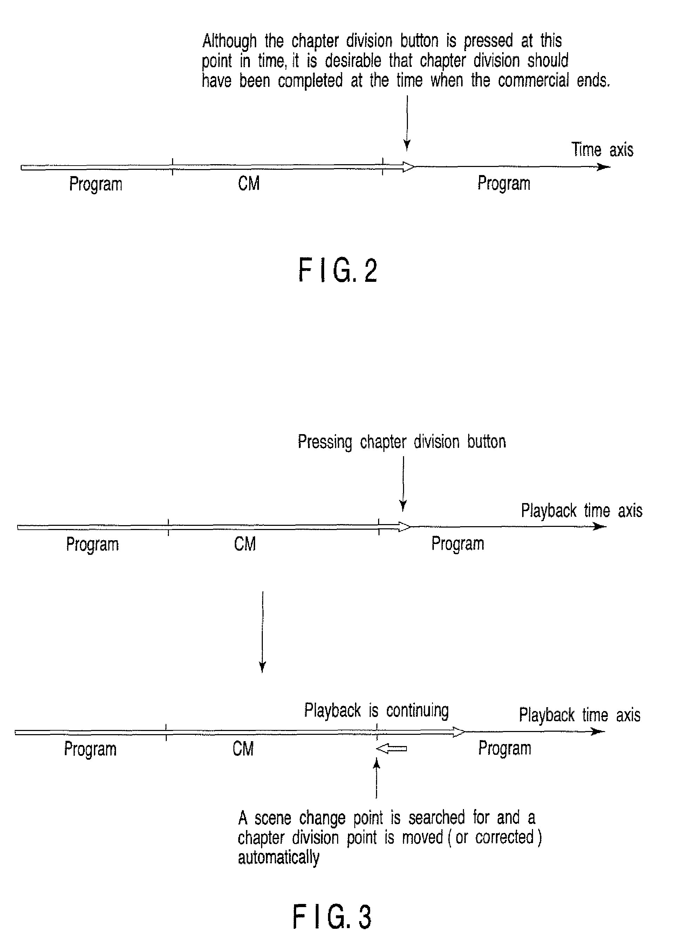

Here, referring to FIG. 2, the problems of a conventional chapter division function will be explained.

In the commercially available HDD/DVD recorders or DVD players, a chapter division point is set at the time when the chapter division button is pressed during reproduction. In such a case where reproduced images are advanced by frame by frame, a chapter division point can be set with relatively high accuracy, which causes no problem.

However, in a case where a chapter division point is set in the middle of reproducing images at a normal speed, there is a time lag from when the user recognizes a chapter division point (a point to be divided) until the user actually presses the chapter division button. Therefore, it is practically impossible to set a chapter division point accurately in frames.

Use of the chapter editing function or frame-by-frame advance function makes it possible to set a chapter division point accurately. This is, however, difficult for beginners in terms of concepts and operations. Use of such a function is a troublesome job even to advanced users.

Hereinafter, the way the above-described information recording and reproducing apparatus edits (or chapter-divides) audio-video information will be explained.

A specific image pattern or a specific motion change pattern is detected from the data digitally compressed according to the MPEG standard and the image is recognized. On the basis of the result of the recognition, the scene can be divided. Alternatively, the scene can be divided by detecting a change in the audio output. Alternatively, the scene can be divided by detecting a silent section.

The information recording and reproducing apparatus of the embodiment uses, for example, those scene dividing techniques, thereby detecting a scene change point closest to and earlier (or later) than the time at which the chapter division button 15a was pressed during the reproduction and automatically setting a chapter division point to the scene change point.

Use of this function enables even a video editing novice to set chapter division to a scene change point as accurately as in frames. Moreover, even heavy users can perform chapter division in frames in simple operations (without stopping the reproduction) to some extent as they want to, which makes it possible to reduce the burden on editing.

Next, referring to FIG. 3, the setting of chapter division points will be explained in detail.

In a usage scene where the user wants to set a chapter division point, while reproducing the recorded audio and video (or checking the contents), it is difficult to set a chapter division point accurately with a conventional chapter division function.

However, the information recording and reproducing apparatus of the embodiment can solve the above problem by using a scene detecting function.

Specifically, the boundary detecting section 4 analyzes audio-video information and detects a boundary point (or a scene change point) in the audio-video information. The chapter setting section 5 corrects the chapter division point corresponding to the timing of specifying chapter division by the chapter division button 15a of the remote controller 15 during the reproduction of the audio-video information to a boundary point in the audio-video information detected before the timing of specifying chapter division and sets the corrected chapter division point.

Alternatively, the chapter setting section 5 corrects the chapter division point corresponding to the timing of specifying chapter division by the chapter division button 15a of the remote controller 15 during the reproduction of the audio-video information to a boundary point in the audio-video information detected after the timing of specifying chapter division and sets the corrected chapter division point.

In a usage scene where the user sets a chapter division point, while viewing, the user almost always presses the chapter division button 15a immediately after the scene changes in the middle of viewing. In such a case, since the user usually presses the chapter division button 15a immediately after the scene changes, it is easy to detect the scene change point immediately before the pressing even if the scene detecting function of the boundary detecting section 4 is not so high.

For example, the boundary detecting section 4 has only to detect a boundary point from audio-video information in a specific time (of about several seconds) before the timing of specifying chapter division. That is, grasping the characteristics of the user operation makes it possible to provide the user with a great advantage even with a low-cost scene change function.

While a boundary point has been detected from audio-video information in a specific time (of about several seconds) before the timing of specifying chapter division, a boundary point may be detected from audio-video information in a specific time (of about several seconds) after the timing of specifying chapter division.

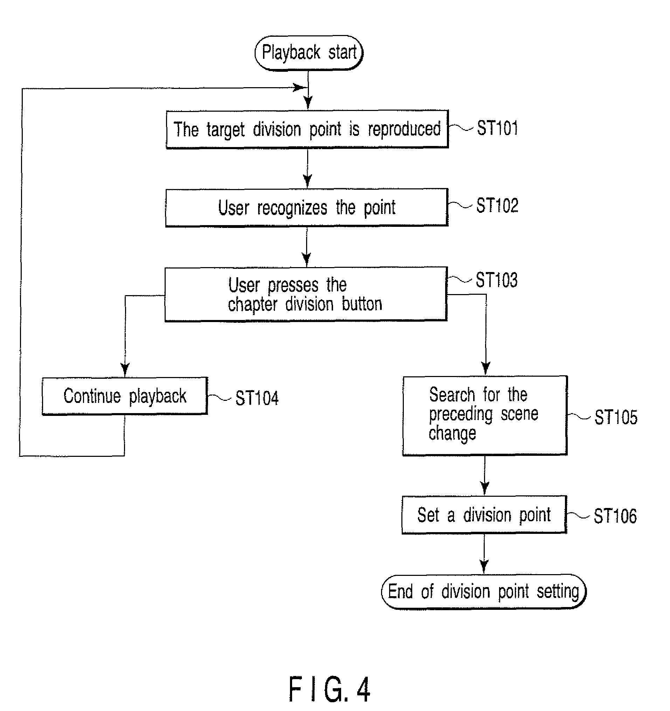

FIG. 4 is a flowchart to help explain the setting of a chapter division point.

The user waits for the timing of setting a chapter division point, while reproducing (or viewing) audio-video information in which the user is going to set a chapter division point. For example, when the scene changes in the middle of viewing (ST101), the user recognizes the scene change (ST102) and presses the chapter division button 15a of the remote controller 15 (ST103). At this time, the audio-video information is reproduced directly (ST104). On the other hand, the chapter setting section 5 searches for a boundary point (or a scene change point) in the audio-video information detected before (or immediately before) the timing of specifying chapter division (ST105), corrects the chapter division point corresponding to the timing of specifying chapter division to the boundary point, and sets the corrected chapter division point (ST106).

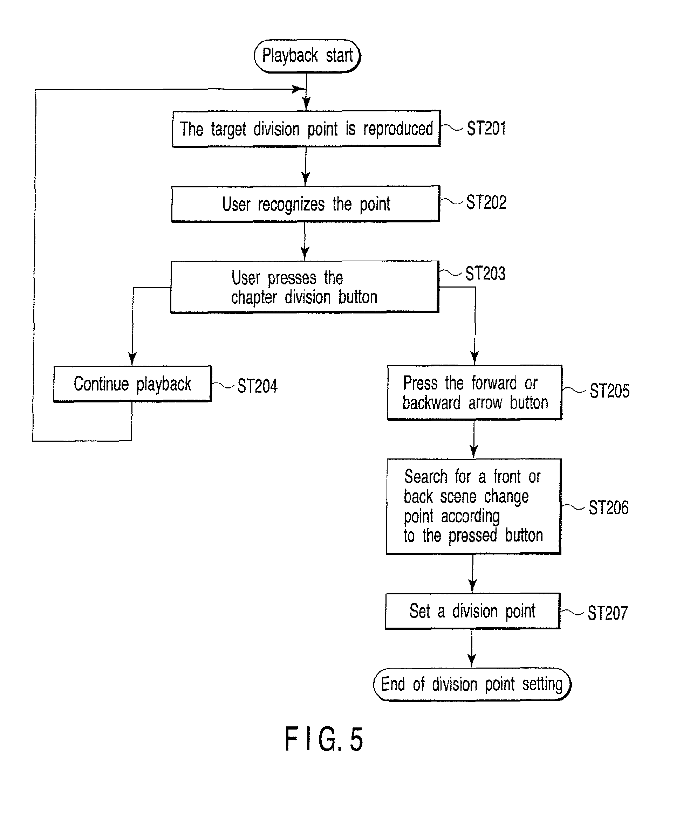

FIG. 5 is a flowchart to help explain the process of selecting a first correction that corrects a chapter division point so as to put the point before the timing of specifying chapter division and a second correction that corrects a chapter point so as to put the point after the timing of specifying chapter division and then setting them.

The user waits for the timing of setting a chapter division point, while reproducing (or viewing) audio-video information in which the user is going to set a chapter division point. For example, when the scene changes in the middle of viewing (ST201), the user recognizes the scene change (ST202) and presses the chapter division button 15a of the remote controller 15 (ST203). At this time, the audio-video information is reproduced directly (ST204). The user further presses the forward key 15b or backward key 15c of the remote controller 15 (ST205).

When the forward key 15b is pressed (or when the first correction is specified), the chapter setting section 5 searches for a boundary point (or a scene change point) in the audio-video information detected before (or immediately before) the timing of specifying chapter division (ST206), corrects the chapter division point corresponding to the timing of specifying chapter division to the boundary point, and sets the corrected chapter division point (ST207).

When the backward key 15c is pressed (or when the second correction is specified), the chapter setting section 5 searches for a boundary point (or a scene change point) in the audio-video information detected after (or immediately after) the timing of specifying chapter division (ST206), corrects the chapter division point corresponding to the timing of specifying chapter division to the boundary point, and sets the corrected chapter division point (ST207).

While the direction in which the chapter division point is to be corrected has been specified after chapter division has been specified, the embodiment is not limited to this method.

For example, the direction in which the chapter division point is to be corrected may be specified in advance and all subsequent chapter divisions may be set to the specified correction direction. That is, first, the user presses the forward key 15b (specifying the first correction) and corrects all of the chapter division points corresponding to the subsequent presses of the chapter division button 15a to the boundary point (or scene change point) in the audio-video information detected before (immediately before) the timing of specifying chapter division. Alternatively, first, the user presses the backward key 15c (specifying the second correction) and corrects all of the chapter division points corresponding to the subsequent presses of the chapter division button 15a to the boundary point (or scene change point) in the audio-video information detected after (immediately after) the timing of specifying chapter division.

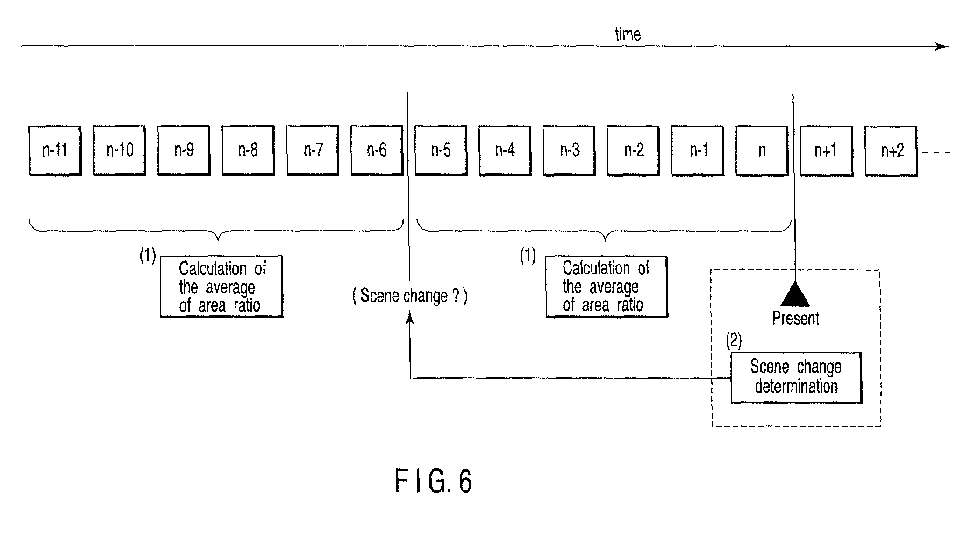

Next, a method of detecting a scene change point will be explained. FIG. 6 is a timing chart to help explain the basic principle of detecting a scene change.

In FIG. 6, the elapse of time is shown from left to right. Suppose the frames of video data included in the broadcast signal received by the tuner 1 advance in this order: n - 11, n - 10, ..., n - 1, n, n + 1, .... In this situation, the boundary detecting section 4 calculates the average of the area ratio of the luminance signals in a specific range (0 to 25 IRE) of the total range (0 to 100 IRE) of luminance signal levels to the entire screen in units of, for example, 6 frames (see FIG. 6(1)). Here, 6 frames, the unit of computing the average of the area ratio, is illustrative, and not restrictive.

After calculating the average of the area ratio, the boundary detecting section 4 uses the latest average of the area ratio and the preceding one to determine whether to set the boundary between the preceding frame group (frame n-5 to frame n) and the following frame group (frame n-11 to frame n-6) as a scene change place (see FIG. 6(2)). This determination is made, depending on whether the following conditions are satisfied:

### (1) About the amount of change

(a) The area ratio increases by X (e.g., 3)% or more.

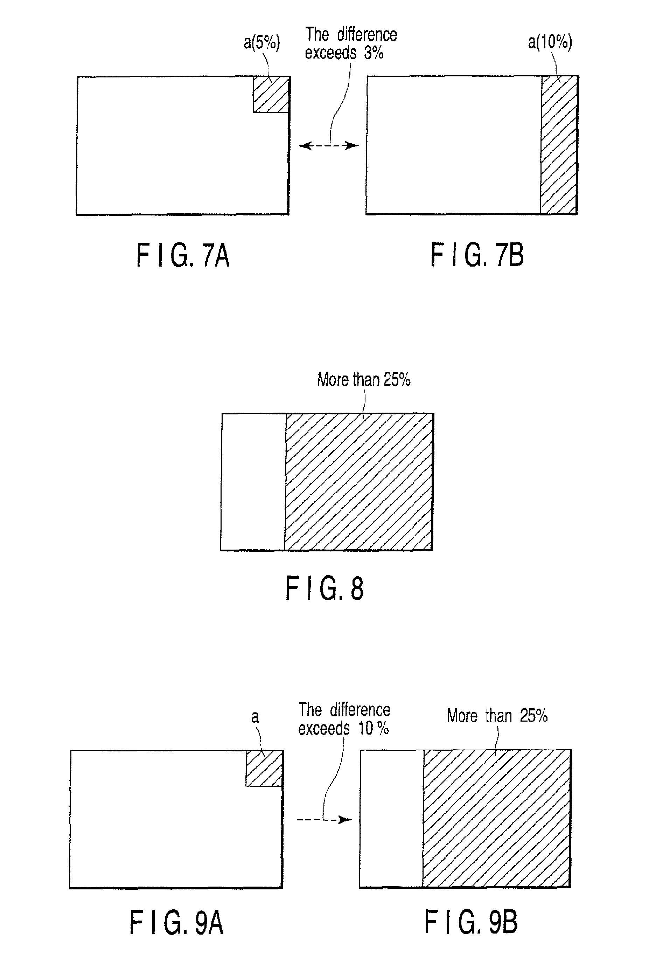

If this condition is not met, the boundary detecting section 4 determines that the place is not a scene change place. In the example of FIGS. 7A and 7B, since the area ratio of the luminance signals in the range of 0 to 25 IRE to the entire screen is 5% in (A) and 10% in (B) and the difference between them exceeds 3%, the condition for the amount of change is satisfied in both (A) → (B) and (B) → (A). If this condition is satisfied, then the boundary detecting section 4 checks whether the condition for the area ratio shown below is fulfilled.

### (2) About the area ratio

(a) The area ratio is Y (e.g., 25)% or less.

If this condition is not satisfied, that is, Y% is exceeded, the boundary detecting section 4 basically suppresses the setting of the place as a scene change place, even when the area ratio increases or decreases by X% or more. In contrast, if the condition is satisfied, the boundary detecting section 4 determines at that time that the place is a scene change place. In the example of FIG. 8, since the area ratio of the luminance signals in the range of 0 to 25 IRE to the entire screen exceeds 25%, the condition for the area ratio is not basically fulfilled.

If Y% has been exceeded, the boundary detecting section 4 further checks whether the following condition is satisfied as a secondary condition:

(b) The area ratio has increased by Z (e.g., 10)% or more.

If this condition is satisfied, the boundary detecting section 4 determines that the place is a scene change place, even when y% has been exceeded. That is, as shown in the example of FIG. 8, even when the area ratio has exceeded 25%, it involves an increase of 10% or more as in (A) → (B) as shown in FIGS. 9A and 9B, the boundary detecting section 4 determines on an exceptional basis that the condition for the area ratio has been fulfilled.

As described above, the boundary detecting section 4 can detect a scene change place by measuring only (1) the amount of change and (2) the area ratio.

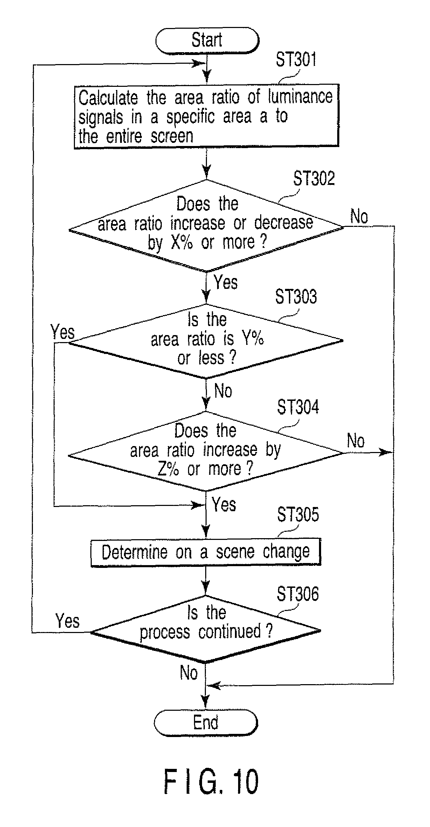

Next, referring to the flowchart of FIG. 10, the procedure for detecting a scene change executed by the boundary detecting section 4 will be explained.

First, the boundary detecting section 4 calculates the area ratio of the luminance signals in a specific range to the entire screen for the video data of the broadcast signal received from the tuner 1 (ST301). After calculating the area ratio, the boundary detecting section 4 determines whether the increase or decrease is X (e.g., 3)% or more (ST302).

If it is X% or more (YES in ST302), the boundary detecting section 4 then determines whether the area ratio itself is Y (e.g., 25)% or less (ST303). At this time, if Y% has been exceeded (NO in ST303), the boundary detecting section 4 further determines whether the area ratio has exceeded Z (e.g., 25)% or more (ST304).

If the result of the determination has shown that (1) the increase or decrease is X% or more and (2) the area ratio is Y% or less, or the area ratio has exceeded Z% or more (that is, YES in ST302 → YES in ST303 or YES in ST302 → NO in ST303 → YES in ST304), the boundary detecting section 4 determines that the place is a scene change place (ST305) and continues the process as needed (ST306).

On the other hand, if the result of the determination has shown that (1) the increase or decrease of the area ratio is less than X% or less or the increase or decrease is X% or more and (2) the area ratio has exceeded Y% and is Z% or less (that is, NO in ST302, or YES in ST302 → NO in ST303 → NO in ST304), the boundary detecting section 4 determines that the place is not a scene change place and continues the process as needed (ST306).

Next, the detection of a boundary point on the basis of the change of the audio output will be explained. The boundary detecting section 4 detects a commercial interval on the basis of the change of the audio mode (stereo ← → monaural) and then detects the starting point and ending point of the commercial interval as boundary points. Alternatively, the boundary detecting section 4 detects a plurality of silent points (the changes of commercials) appearing at short intervals and then detects the first and last silent points (corresponding to the starting point and ending point of the commercial) of the plurality of silent points detected as boundary points. Specifically, when the user presses the chapter division button 15a as soon as a commercial interval has started, the starting point of the commercial interval immediately before the button is pressed is detected. A chapter division point is set to the starting point of the commercial interval. As soon as the commercial interval has ended, when the user presses the chapter division button 15a, the ending point of the commercial interval immediately before the button is pressed is detected. A chapter division point is set to the ending point of the commercial interval.

As described above, the information recording and reproducing apparatus of the embodiment can set a chapter division point to a scene change point immediately before (or immediately after) the chapter division button 15a is pressed, not at the time when the chapter division button 15a is pressed. Consequently, even if the chapter division button is pressed a little before or after the scene change point when a chapter division point is set, while audio video is being reproduced in the normal mode (or reproduced at constant speed), the chapter division point is corrected automatically to the scene change point. Therefore, the apparatus is easy for novice users to use and enables even advanced users to improve operationality.

## Claims

1. An information editing apparatus **characterized by** comprising:
a reproducing unit (1, 2, 3) configured to reproduce audio-video information;
a boundary detecting unit (4) configured to analyze the audio-video information reproduced by the reproducing unit and detect a boundary point in the audio-video information;
a chapter division specifying unit (15, 12d) configured to specify chapter division according to the input of chapter division operation during the reproduction of the audio-video information by the reproducing unit; and
a chapter setting unit (5) configured to correct a chapter division point corresponding to the timing of specifying chapter division on the basis of the boundary point in the audio-video information detected before or after the timing of specifying chapter division at the chapter division specifying unit and set the corrected chapter division point.

2. The information editing apparatus according to claim 1, **characterized in that** the boundary detecting unit sets as the boundary point a scene change point detected on the basis of the result of the analysis of the similarity between a plurality of frames included in the audio-video information.

3. The information editing apparatus according to claim 1, **characterized in that** the boundary detecting unit sets as the boundary point a scene change point detected on the basis of the result of the analysis of the luminance signals of a plurality of frames included in the audio-video information.

4. The information editing apparatus according to claim 1, **characterized in that** the boundary detecting unit sets as the boundary point an audio-output change point detected on the basis of the result of the analysis of the audio-video information.

5. The information editing apparatus according to claim 1, **characterized in that** the boundary detecting unit sets as the boundary points the first silent section and the last silent section among a plurality of silent sections regularly following one another detected on the basis of the result of the analysis of the audio-video information.

6. The information editing apparatus according to claim 1, **characterized in that** the boundary detecting unit detects the boundary point from the audio-video information in a specific time before or after the timing of specifying chapter division.

7. The information editing apparatus according to claim 1, **characterized by** further comprising a correction condition setting unit (15) configured to selectively set a first correction that makes a correction so as to put a chapter division point before the timing of specifying chapter division and a second correction that makes a correction so as to put a chapter division point after the timing of specifying chapter division,
wherein the chapter setting unit, on the basis of the setting of the first correction, corrects a chapter division point corresponding to the timing of specifying chapter division to a boundary point in the audio-video information detected before the timing of specifying chapter division and, on the basis of the setting of the second correction, corrects a chapter division point corresponding to the timing of specifying chapter division to a boundary point in the audio-video information detected after the timing of specifying chapter division.

8. An information editing method **characterized by** comprising:
on the basis of a boundary point in audio-video information detected before or after the timing of specifying chapter division according to a chapter division instruction during the reproduction of audio-video information, correcting a chapter division point corresponding to the timing of specifying chapter division (ST105); and
setting the corrected chapter division point (ST106) .

9. The information editing method according to claim 8, **characterized by** further comprising: setting as the boundary point a scene change point detected on the basis of the result of the analysis of the similarity between a plurality of frames included in the audio-video information.

10. The information editing method according to claim 8, **characterized by** further comprising: setting as the boundary point a scene change point detected on the basis of the result of the analysis of the luminance signals of a plurality of frames included in the audio-video information.

11. The information editing method according to claim 8, **characterized by** further comprising: setting as the boundary point an audio-output change point detected on the basis of the result of the analysis of the audio-video information.

12. The information editing method according to claim 8, **characterized by** further comprising: setting as the boundary points the first silent section and the last silent section among a plurality of silent sections regularly following one another detected on the basis of the result of the analysis of the audio-video information.

13. The information editing method according to claim 8, **characterized by** further comprising: detecting the boundary point from the audio-video information in a specific time before or after the timing of specifying chapter division.

14. The information editing method according to claim 8, **characterized by** further comprising:
selectively setting a first correction that makes a correction so as to put a chapter division point before the timing of specifying chapter division and a second correction that makes a correction so as to put a chapter division point after the timing of specifying chapter division; and
on the basis of the setting of the first correction, correcting a chapter division point corresponding to the timing of specifying chapter division to a boundary point in the audio-video information detected before the timing of specifying chapter division and, on the basis of the setting of the second correction, correcting a chapter division point corresponding to the timing of specifying chapter division to a boundary point in the audio-video information detected after the timing of specifying chapter division.

15. An information editing program **characterized by** comprising:
causing an information editing apparatus to carry out a step of, on the basis of a boundary point in audio-video information detected before or after the timing of specifying chapter division according to a chapter division instruction during the reproduction of audio-video information, correcting a chapter division point corresponding to the timing of specifying chapter division and
a step of setting the corrected chapter division point.
